**Europäisches Patentamt**

**European Patent Office**

**Office européen des brevets**

(11) Numéro de publication: **0 248 724**

**A1**

(12) **DEMANDE DE BREVET EUROPEEN**

(21) Numéro de dépôt: **87401226.3**

(22) Date de dépôt: **02.06.87**

(51) Int. Cl.⁴: **F 16 K 1/30**

(30) Priorité: **04.06.86 FR 8608038**

(43) Date de publication de la demande:
**09.12.87 Bulletin 87/50**

(84) Etats contractants désignés:
**AT BE CH DE ES GB GR IT LI LU NL SE**

(71) Demandeur: **Société dite ROVIP S.A.**
**Chavannes**
**CEYZERIAT (Ain) (FR)**

(72) Inventeur: **Rollet,Marius**
**Chavannes**
**F-01250 Ceyzeriat (Ain) (FR)**

(74) Mandataire: **Cabinet Pierre HERRBURGER**
**115, Boulevard Haussmann**
**F-75008 Paris (FR)**

(54) **Robinet de bouteille de gaz ou similaire.**

(57) Robinet de bouteille de gaz ou similaire, caractérisé en ce qu'il comprend un piston (3) mobile axialement dans un corps (1) de robinet et venant s'appliquer par son extrémité sur un siège (2), ce piston étant déplacé axialement par un volant (4) auquel il est relié par un assemblage (9, 10) autorisant la rotation du volant par rapport au piston.

FIG.1

EP 0 248 724 A1

## Description

"Robinet de bouteille de gaz ou similaire"

L'invention concerne un robinet de bouteille de gaz ou similaire.

L'invention est caractérisée en ce que le robinet comprend un piston mobile axialement dans un corps de robinet et venant s'appliquer par son extrémité sur un siège, ce piston étant déplacé axialement par un volant auquel il est relié par un assemblage autorisant la rotation du volant par rapport au piston.

Suivant une autre caractéristique de l'invention, le piston et le volant sont reliés par un assemblage présentant une nervure et une rainure circulaires.

Suivant une autre caractéristique de l'invention, le piston est guidé axialement par des ailettes formées longitudinalement sur la paroi du piston.

Suivant une autre caractéristique de l'invention, le volant, le corps et le piston sont réalisés en matière plastique, le corps et le piston comportant des inserts métalliques filetés coopérant l'un l'autre pour la rotation du volant sur le corps.

L'invention est représentée à titre d'exemple non limitatif sur les dessins ci-joints dans lesquels :

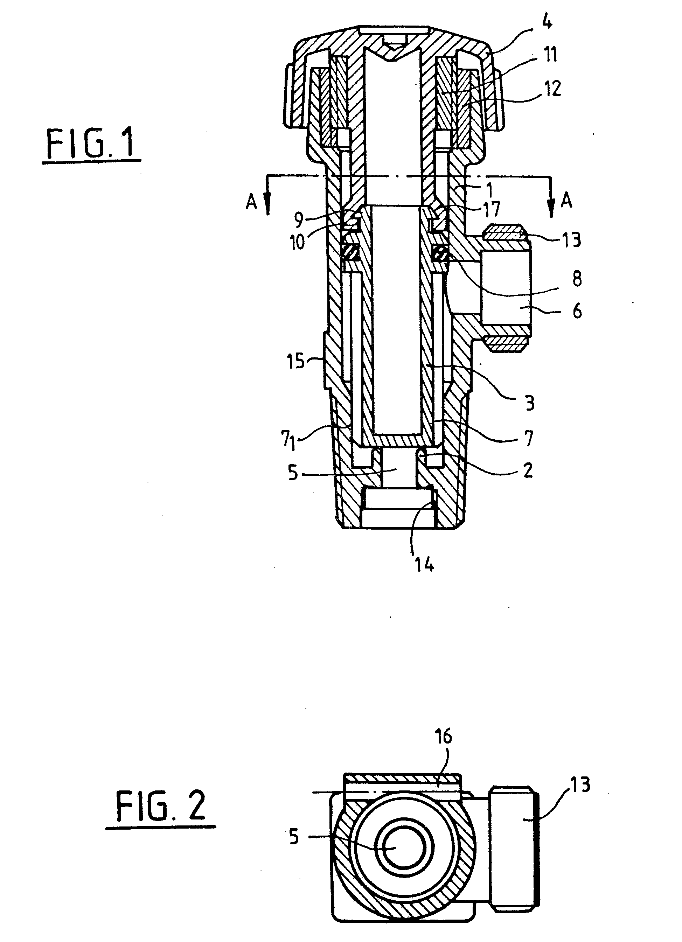

- la figure 1 est une vue en coupe axiale du robinet conforme à l'invention,

- la figure 2 est une coupe suivant A-A de la figure 1.

La présente invention a, en conséquence, pour but la réalisation d'un robinet de bouteille de gaz et, d'une manière générale, de tous les contenants de gaz, ce robinet présentant la particularité d'être réalisé essentiellement en matière plastique et donc, d'être d'un faible poids et d'un faible coût, ce robinet étant cependant d'une bonne fiabilité.

Ce robinet comprend un corps creux 1 en matière plastique, qui est pourvu à son extrémité inférieure ouverte d'un siège 2 sur lequel est destiné à venir s'appliquer axialement le piston 3 également en matière plastique.

Le piston 3 est déplacé axialement par un volant 4 de façon que, en position d'ouverture de ce robinet, le gaz puisse s'écouler de l'orifice d'entrée 5 et vers l'orifice de sortie 6 en passant par la périphérie du piston 3.

Le piston 3 comporte sur sa périphérie des ailettes longitudinales 7 qui s'appliquent à frottement léger en 7₁ contre la paroi interne du corps 1, afin de guider le piston et afin qu'il s'applique dans une position précise contre le siège 2.

Le piston 3 est également pourvu d'une gorge annulaire à l'intérieur de laquelle est logé un joint d'étanchéité torique 8 s'appliquant contre la paroi interne du corps 1, cette gorge et ce joint 8 étant cependant disposés de manière que le joint 8 soit constamment disposé au-dessus de l'orifice de sortie 6 du gaz. L'extrémité supérieure du piston 3 est assemblée au volant 4 par l'intermédiaire d'une nervure circulaire 9 formée à l'extrémité du piston, cette nervure venant se loger par encliquetage dans une rainure de forme correspondante 10 réalisée à l'extrémité inférieure du volant 4.

Cet assemblage permet donc la libre rotation du piston 3 par rapport au volant 4, ce qui évite une usure intempestive du piston du fait que celui-ci n'est pas entraîné en rotation lorsqu'il est appliqué contre le siège 2 et que l'on manoeuvre le volant 4 pour l'ouverture ou la fermeture du robinet.

Le volant 4 est également réalisé en matière plastique et est monté à rotation sur le corps 1 par l'intermédiaire d'inserts fileté 11 et taraudé 12 prévus respectivement sur le volant et dans le corps 1. Ces inserts, qui sont bloqués sur le volant 4 ou sur le corps 1, permettent la rotation du volant 4 pour le déplacer axialement sans entraîner une usure incompatible avec une bonne fiabilité du robinet.

Le corps 1 comporte également un second insert fileté 13, disposé à la périphérie de l'orifice d'évacuation 6, afin de permettre le raccordement du robinet à une conduite de gaz ou similaire. Le montage du robinet sur sa bouteille est assuré par l'intermédiaire d'un taraudage 14 prévu à l'extrémité du corps 1 et débouchant dans l'orifice 5 pourvu du siège 2.

Le serrage du corps 1 sur le filetage de la bouteille de gaz, sera obtenu par la mise en place d'une clé sur une zone de section polygonale et, par exemple, carrée 15 prévue sur le corps 1.

Afin d'éviter la dissociation du volant et du corps, le corps 1 comporte un logement transversal 16 recevant une goupille (non représentée) qui se loge sur le trajet de l'épaulement inférieur 17 du volant 4, à l'intérieur duquel est prévue la rainure 10.

On notera également que le robinet conforme à l'invention est réalisé essentiellement en matière plastique et que, de ce fait, il est autoextinguible mais fongible au feu. Ainsi, en cas d'incendie, la bouteille de gaz se transforme en chalumeau éphémère, le robinet servant de soupape de sécurité, au lieu de constituer, comme à ce jour avec un robinet métallique, une bombe à retardement de forte puissance.

## Revendications

1°) Robinet de bouteille de gaz ou similaire, caractérisé en ce qu'il comprend un piston (3) mobile axialement dans un corps (1) de robinet et venant s'appliquer par son extrémité sur un siège (2), ce piston étant déplacé axialement par un volant (4) auquel il est relié par un assemblage (9, 10) autorisant la rotation du volant par rapport au piston.

2°) Robinet conforme à la revendication 1, caractérisé en ce que le piston (3) et le volant (4) sont reliés par un assemblage présentant une nervure (9) et une rainure (10) circulaires.

3°) Robinet conforme à la revendication 1, caractérisé en ce que le piston (3) est guidé axialement dans le corps par des ailettes (7).

4°) Robinet conforme à la revendication 3, caractérisé en ce que les ailettes longitudinales sont formées sur la paroi du piston.

5°) Robinet conforme à l'une quelconque des revendications précédentes, caractérisé en ce que le volant (4), le corps (1) et le piston (3) sont réalisés en matière plastique, le corps et le piston comportant des inserts métalliques filetés coopérant l'un l'autre pour la rotation du volant sur le corps.

0248724

FIG.1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 116 952 (GAUPILLAT) * En entier * | 1,3 | F 16 K 1/30 |
| X | FR-A-1 309 289 (GAUPILLAT) * En entier * | 1,2 | |
| X | FR-A-1 126 568 (CLESSE) * En entier * | 1,2 | |

DOMAINES TECHNIQUES RECHERCHES (Int. Cl.4)

F 16 K

Le présent rapport de recherche a été établi pour toutes les revendications

| Lieu de la recherche | Date d'achèvement de la recherche | Examinateur |
|---|---|---|
| LA HAYE | 26-08-1987 | VERELST P.E.J. |